# EUROPÄISCHE PATENTSCHRIFT

(11) **EP 0 732 189 B1**
(45) Veröffentlichungstag und Bekanntmachung des Hinweises auf die Patenterteilung: **27.06.2001**
(21) Anmeldenummer: 96103538.3
(22) Anmeldetag: 07.03.1996
(51) Int. Cl.: B29C 63/04, B27D 1/00

(54) **Maschine zum Ummanteln von länglichen Werkstücken**
Apparatus for covering an elongate object
Dispositif de revêtement d'un corps allongé

(30) Priorität: 11.03.1995 DE 19508864
(43) Veröffentlichungstag der Anmeldung: 18.09.1996
(73) Patentinhaber: Wessel, Karl-Heinz, 32602 Vlotho (DE); MANTELPROFILWERK BERG GmbH, 33397 Rietberg (DE)
(72) Erfinder: Wessel, Karl-Heinz, 32602 Vlotho (DE)
(74) Vertreter: Patentanwälte Dipl.-Ing. Bodo Thielking Dipl.-Ing. Otto Elbertzhagen

(56) Entgegenhaltungen:
- DE-A- 2 532 855
- US-A- 3 296 052
- US-A- 3 698 989
- US-A- 4 373 984

## Beschreibung

Die Erfindung bezieht sich auf eine Maschine zum Ummanteln von länglichen Werkstücken der im Gattungsbegriff des Patentanspruchs 1 näher bezeichneten Art.

Eine solche Maschine ist aus der DE 25 32 855 A1 bekannt, und dort sind die jeweils kreisrund ausgebildeten Halteringe einstückig, weswegen ihr Durchmesser den Arbeitsraum für die Beschichtung der im wesentlichen zentral durch sie hindurchlaufenden Werkstücke begrenzt. Zwar sind die an den Halteringen angeordneten Haltearme radial verstellbar, womit sie mit den endseitig daran angeordneten Andruckrollen mehr oder weniger weit zum Zentrum der Halteringe hin angeordnet werden können, was eine Anpassung an unterschiedliche Querschnittsformen der länglichen Werkstücke ermöglicht, dennoch dürfen bei der bekannten Maschine bestimmte Querschnittsformate der Werkstücke, insbesondere in der Breitenrichtung nicht überschritten werden. Damit können vor allem plattenförmige Werkstücke, wie Paneelbretter, nur bis zu einer vorgegebenen maximalen Breite mit der bekannten Maschine bewältigt werden.

Aus der Patentschrift CH-A-454 677 ist eine Maschine zur Beschichtung von nicht in einer Ebene liegenden Werkstückoberflächen mittels einer Kunststoff-Folie bekannt, die der vorgenannten Maschine ähnlich ist, jedoch anstelle der genannten Halteringe zwei über die gesamte Bearbeitungslänge der Maschine reichende Lagergestelle hat, an denen die Werkstücke tragende Förderwalzen sowie die Werkstücke oberseitig beaufschlagende Andrückwalzen gelagert sind. Um die Maschine an unterschiedlich breite Werkstücke anpassen zu können, kann das eine der Lagergestelle gegenüber dem zweiten Lagergestell quer zur Längsrichtung bzw. Förderrichtung der Maschine verstellt werden. Um mit dieser Maschine Werkstücke von unterschiedlichen Querschnittsformen beschichten zu können, müssen die Andrückwalzen und ggf. auch die Förderwalzen an den Lagergestellen in ihrer Position verstellt werden, was nur an der Maschine selbst erfolgen kann, da die Lagergestelle vom Maschinenbett nicht abnehmbar sind.

Der Erfindung liegt die Aufgabe zugrunde, eine Maschine der gattungsgemäßen Art zu schaffen, mit der längliche Werkstücke nicht nur von größeren Querschnittsformaten im Durchlauf ummantelt werden können sondern die auf unterschiedliche Querschnittsformate einfach umrüstbar ist.

Diese Aufgabe wird bei einer gattungsbildenden Maschine nach der Erfindung durch die kennzeichnenden Merkmale des Patentanspruchs 1 gelöst. Für die Erfindung ist wesentlich, daß die Ringhälften der jeweils unterteilten Halteringe im Bedarfsfall je nach der notwendigen Position der daran anzuordnenden Andruckrollen voneinander abgerückt werden können, wobei sich ihr Abstand zur Vorschubvorrichtung vergrößert. Damit kann ferner der zwischen den Ringhälften liegende, gesamte Arbeitsraum erweitert werden. Dies ist selbst bei einer vorhandenen Vorschub- und Transportvorrichtung für die Werkstücke möglich, weil für eine Ummantelung bis um die längsseitigen Seitenkanten und -flächen herum die Werkstücke mit ihren Längsseiten über die Vorschubvorrichtung überstehen und dieser Überstand in Breitenrichtung der Werkstücke ohne weiteres vergrößert werden kann. Zudem ist die austauschbare Anordnung der Ringhälften auf den Supporten ein wichtiges Merkmal der Erfindung.

Vorteilhafte Ausgestaltungsmerkmale der Erfindung ergeben sich aus den Merkmalen der Unteransprüche. Vor allem ist hier von Bedeutung, die Ringhälften der Halteringe als austauschbare Sätze auszubilden, wobei jeder Ringhälften-Satz einer bestimmten Querschnittskonfiguration der Werkstücke zugeordnet ist. Ist die Beschichtung von Werkstücken einer bestimmten Querschnittsform beendet, erfolgt die Umrüstung der Maschine auf die Konfiguration der nachfolgend zu bearbeitenden Werkstücke, indem der gesamte Ringhälften-Satz ausgetauscht wird. Dies setzt voraus, daß bei den Ringhälften die Andruckrollen dauerhaft justiert sind, was beispielsweise beim ersten Probedurchlauf einer neuen Werkstück-Querschnittsform vorgenommen werden kann. Für die betreffende Werkstück-Querschnittsform ist somit der jeweilige Satz der Ringhälften immer wieder verwendbar. Zwar bedeutet es einen höheren Aufwand, die benötigte Anzahl der Sätze von Ringhälften herzustellen und bereitzuhalten, dafür sind beim Umrüsten die Stillstandzeiten der Maschine erheblich verkürzt. Da bei den Ringhälften-Sätzen eine oftmalige Verstellung der Haltearme und der Andruckrollen nicht in Betracht kommt, kann durch eine geeignete Materialwahl für die Ringhälften sowie durch eine vereinfachte Befestigung der Haltearme an den Ringhälften der Aufwand für die Ringhälften-Sätze geringgehalten werden, womit der Vorteil der verkürzten Maschinen-Rüstzeiten noch stärker zum Tragen kommt.

Die Erfindung wird nachfolgend anhand der Zeichnung an einem Ausführungsbeispiel noch näher erläutert. Dabei zeigen:
- Fig. 1: einen schematischen Querschnitt durch eine Ummantelungsmaschine mit der Stirnansicht eines der Halteringe und
- Fig. 2: die Seitansicht eines Abschnittes der Maschine nach Figur 1.

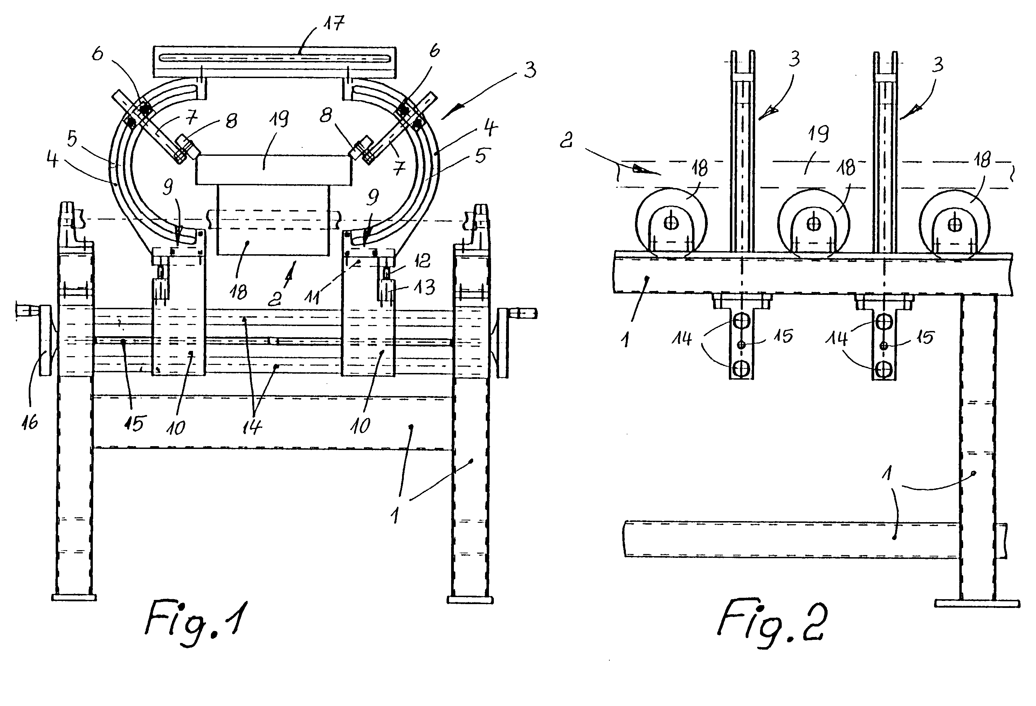

Im einzelnen zeigt die Zeichnung ein Maschinengestell 1, auf dem oberseitig eine Transport- und Vorschubvorrichtung 2 für längliche Werkstücke 19 angeordnet ist. Wie insbesondere Figur 2 erkennen läßt, besteht die Vorschubvorrichtung 2 aus einer Vielzahl von quer zur Vorschubrichtung angeordneten Vorschubrollen 18, die sich zu einer sogenannten Rollenbahn ergänzen. Bei den darauf geförderten, länglichen Werkstücken 19 handelt es sich um Leisten, Bretter oder dergl., die im Durchlauf durch die Maschine mit einem bandförmigen Beschichtungsmaterial ummantelt werden. Dies geschieht bis um die schmalen Längsseitenflächen der Werkstücke herum, weshalb die Werkstücke 19 mit ihren beidseitigen Längsseitenbereichen über die Vorschubvorrichtung 2 überstehen.

Zwischen den einzelnen Vorschubrollen 18 der Vorschubvorrichtung 2 sind Halteringe 3 auf dem Maschinengestell 1 angeordnet, die mit der jeweils von ihnen aufgespannten Ebene senkrecht zur Vorschubrichtung der Vorschubvorrichtung 2 stehen, wie insbesondere Figur 2 deutlich macht. Die Halteringe 3 bestehen je aus zwei Ringhälften 4, die zu der vertikalen, durch die Vorschubvorrichtung 2 hindurchgehenden Mittenebene spielgelsymmetrisch ausgebildet und angeordnet sind. Insoweit ist die Teilungsebene der beiden Ringhälften 4 ebenfalls eine Vertikalebene. So stehen sich die etwa C-förmigen Ringhälften 4 mit ihren inneren Konkavseiten einander gegenüber und schließen zwischen sich in voneinander weggerückter Lage einen etwa ovalen Arbeitsraum ein. Anders als beim dargestellten Ausführungsbeispiel können die Ringhälften 4 anstelle der halbkreisförmigen Grundgestalt eine andere Form haben, die auf einem Polygon, einer Ellipse oder dergl. basiert. An zumindest einer der Stirnseiten haben die Ringhälften 4 eine Befestigungskontur 5, beispielsweise in Gestalt einer Nut, an der ein oder mehrere Werkzeughalter 6 festlegbar sind. An jedem dieser Werkzeughalter 6 ist ein in radialer Richtung zur zugehörigen Ringhälfte 4 sich erstreckender Haltearm 7 in seiner Längsrichtung justierbar angeordnet, der an seinem auf der Innenseite der Ringhälfte 4 liegenden Ende eine Andruckrolle 8 trägt. Die Position jeder dieser Andruckrollen 8 ist je nach der Führung und der Verpressung des bandförmigen Beschichtungsmaterials an der jeweiligen Durchlaufstelle der länglichen Werkstücke 19 festzulegen. Unter anderem dienen zumindest einige der Andruckrollen 8 auch dazu, die Lage der länglichen Werkstücke 19 beim Durchlauf durch die Maschine auf der Transport- und Vorschubvorrichtung 2 zu sichern.

Die Lage der Andruckrollen 8 kann nicht nur durch Verschieben der Haltearme 7 gegenüber dem zugehörigen Werkzeughalter 6 und durch Verstellen dieses Werkzeughalters 6 entlang der Ringhälfte 4 variiert werden, sondern zusätzlich auch durch eine Zustellung der Ringhälften 4 in Richtung zu der Vorschubvorrichtung 2 hin oder von dieser weg. Dazu ist jede der Ringhälften 4 mit ihrem Unterende 9 auf einem Support 10 angeordnet, und es sind jeweils die beiden Supporte 10 der einander zugehörigen Ringhälften 4 auf gemeinsamen Führungen 14 gelagert, bei denen es sich um im Maschinengestell 1 aufgehängte Stangen handeln kann. Diese Führungen 14 erstrecken sich quer zu der durch die Vorschubvorrichtung 2 hindurchgehenden, vertikalen Längsmittenebene, und darauf sind die jeweils beiden Supporte 10 in gegenläufiger Bewegung synchron miteinander verschiebbar. Der entsprechende Antrieb der Supporte 10 erfolgt über eine Gewindespindel 15, die im Eingriffsbereich mit dem einen Support 10 ein Rechtsgewinde und im Eingriffsbereich mit dem anderen Support 10 ein Linksgewinde hat. Auf den Enden der Spindeln 15 sitzen Handräder 16, die seitlich am Maschinengestell 1 zugänglich sind, über die die Verschiebung der beiden einander ergänzenden Ringhälften 4 von einander weg oder aufeinander zu bewirkt werden kann. Diese Verstellung kann auch über einen Hilfsantrieb erfolgen, über den die Verstellung aller Ringhälften 4 auch synchron vorgenommen werden kann, sofern anstelle der Handräder 16 miteinander über einen Ketten- oder Riementrieb gekoppelte Räder vorgesehen werden.

Die Supporte 10 haben oberseitige Aufnahmevorrichtungen 11, die auch als Geräteträger bezeichnet werden können. Dazu sind die Unterenden 9 der aufrecht auf den Supporten 10 angeordneten Ringhälften 4 mit entsprechenden Einschubelementen ausgestattet, so daß man die Ringhälften 4 mit ihren Unterenden 9 von der Seite in die Aufnahmevorrichtungen 11 der Supporte 10 einsetzen kann. Für den notwendigen Kraftschluß zwischen den Ringhälften 4 und den Supporten 10 können Prismenführungen oder dergl. vorgesehen werden. Die Fixierung der Ringhälften 4 gegenüber dem jeweils zugeordneten Support 10 erfolgt über einen Indexstift 12 oder dergl., der fremdkraftbetätigt entriegelt und/oder verriegelt werden kann, wozu ein entsprechender Hilfsantrieb 13 dient.

Damit sind die Ringhälften 4 auf den Supporten 10 austauschbar, was es möglich macht, für jedes zu ummantelnde Profil der länglichen Werkstücke einen ganzen Satz der Ringhälften 4 vorzusehen, bei dem nach einer einmaligen Justage für das betreffende Querschnittsprofil der Werkstücke die Andruckrollen 8 fest eingestellt bleiben. Ändert sich das Werkstück-Querschnittsprofil, wird die Maschine auf den dazu passenden Satz der Ringhälften 4 umgerüstet.

Durch die Verstellmöglichkeit der Ringhälften 4 kann der dazwischen liegende Arbeitsraum an die Querschnittsdimension der zu ummantelnden Werkstücke 19 angepaßt und können insbesondere die Andruckrollen 8 auch eine weiter von der Vorschubvorrichtung 2 abliegende Position einnehmen. Die Anbringung zusätzlicher Andruckrollen 8 ermöglicht ein Brückenträger 17, der oben auf die Ringhälften etwa in deren Tangentialrichtung aufgesetzt werden kann. Dieser Brückenträger 17 hat das gleiche Querschnittsprofil wie die Ringhälften 4 selbst, somit können daran in gleicher Weise wie an den Ringhälften 4 mittels Werkzeugträgern 6 und Haltearmen 7 die Andruckrollen 8 angeordnet werden.

## Patentansprüche

1. Maschine zum Ummanteln von länglichen Werkstücken, wie Leisten, Bretter oder dergl., mit einem bandförmigen Beschichtungsmaterial, wie einem Furnier oder einer Folie, mit einer Vorschubvorrichtung (2), auf der die Werkstücke (19) in ihrer Längsrichtung gefördert werden und die zumindest entlang eines Abschnittes von mehreren, in Vorschubrichtung hintereinander angeordneten Halteringen (3) umgeben ist, deren Ebenen jeweils senkrecht zur Vorschubrichtung stehen und an denen nach innen hin Haltearme (7) mit daran endseitig gelagerten Andruckrollen (8) zum Heranführen und/oder Andrücken des Beschichtungsmaterials an die durch die Halteringe (3) hindurchlaufenden Werkstücke (19) angeordnet sind,
dadurch gekennzeichnet,
daß zumindest einige der Halteringe (3) in zwei Ringhälften (4) unterteilt sind, deren Abstand zur Vorschubvorrichtung (2) veränderbar ist und die je auf einem Support (10) angeordnet sind, wobei die Supporte (10) Aufnahmevorrichtungen (11) haben, mittels derer die Ringhälften (4) lösbar mit den Supporten (10) verbunden sind.

2. Maschine nach Anspruch 1,
dadurch gekennzeichnet,
daß die Ringhälften (4) zu der durch die Vorschubvorrichtung (2) hindurchgehenden, vertikalen Längsmittenebene spiegelsymmetrisch ausgebildet und angeordnet sind.

3. Maschine nach Anspruch 1 oder 2,
dadurch gekennzeichnet, daß die die Ringhälften (4) aufnehmenden Supporte (10) auf einer Führung (14) senkrecht zur Längsrichtung der Vorschubvorrichtung (2) verstellbar ist.

4. Maschine nach Anspruch 3,
dadurch gekennzeichnet,
daß die beiden Supporte (10) der jeweils zueinander gehörenden Ringhälften (4) auf einer gemeinsamen, die Vorschubvorrichtung (2) unterquerenden Führung (14) gelagert sind.

5. Maschine nach Anspruch 4,
dadurch gekennzeichnet,
daß die beiden einander zugehörigen Supporte (10) mittels einer gemeinsamen Spindel (15) mit einem Rechts-Links-Gewinde synchron gegenläufig verstellbar sind.

6. Maschine nach einem der Ansprüche 3 bis 5,
dadurch gekennzeichnet, daß die Ringhälften (4) jeweils über ihre Unterenden (9) mit dem betreffenden Support (10) verbunden sind.

7. Maschine nach Anspruch 1 - 6,
dadurch gekennzeichnet,
daß die Aufnahmevorrichtungen (11) oberseitig an den Supporten (10) angeordnete Prismenführungen sowie einen die Ringhälften (4) fixierenden Indexstift (12) aufweisen.

8. Maschine nach einem der Ansprüche 3 bis 7,
dadurch gekennzeichnet,
daß die Ringhälften (4) aller Halteringe (3) einen austauschbaren Satz mit jeweils an den Ringhälften (4) fest justierten Haltearmen (7) und Andruckrollen (8) bilden.

9. Maschine nach einem der Ansprüche 1 bis 8,
dadurch gekennzeichnet,
daß auf die in Abstand voneinander stehenden, jeweils einander zugehörigen Ringhälften (4) ein damit fest verbindbarer Brückenträger (17) zur Anbringung weiterer Haltearme (7) und Andruckrollen (8) aufsetzbar ist.

## Claims

1. Apparatus for covering elongate objects, such as strips, boards or the like, with a strip-like coating material such as a veneer or a foil, with a feed device (2) on which the objects (19) are moved in the longitudinal direction and which is enclosed at least along one section by several holding rings (3) which are arranged in succession in the feed direction and whose planes each stand perpendicular to the feed direction and on which are mounted facing the inside holding arms (7) which have contact pressure rollers (8) mounted at the ends for guiding and/or pressing the coating material against the objects (19) as they pass through the holding rings (3),
characterised in that at least some of the holding rings (3) are divided into two ring halves (4) whose spacing from the feed device (2) is adjustable and which are each mounted on a support (10) wherein the supports (10) have mounting devices (11) by means of which the ring halves (4) can be detachably connected to the supports (10).

2. Apparatus according to claim 1 characterised in that the ring halves (4) are designed and arranged mirror symmetrical relative to the vertical longitudinal centre plane which passes through the feed device (2).

3. Apparatus according to claim 1 or 2 characterised in that the supports (10) holding the ring halves (4) are displaceable on a guide (14) at right angles to the longitudinal direction of the feed device (2).

4. Apparatus according to claim 3 characterised in that the two supports (10) of the ring halves (4) belonging to each other are mounted on a common guide (14) which runs across underneath the feed device (2).

5. Apparatus according to claim 4 characterised in that the two associated supports (10) are adjustable in synchronization opposite one another by means of a common spindle (15) having a right and left thread.

6. Apparatus according to one of claims 3 to 5
characterised in that the ring halves (4) are each connected to the relevant support (10) through their lower ends (9).

7. Apparatus according to claims 1 to 6 characterised in that the mounting devices (11) have on the top side prism guides mounted on the supports (10), as well as an index pin (12) which fixes the ring halves (4).

8. Apparatus according to one of claims 3 to 7
characterised in that the ring halves (4) of all of the holding rings (3) form an interchangeable set each with holding arms (7) fixedly adjusted on the ring halves (4) and with contact pressure rollers (8).

9. Apparatus according to one of claims 1 to 8
characterised in that a bridge support (17) for attaching further holding arms (7) and contact pressure rollers (8) can be set on the mutually spaced associated ring halves (4) and can be fixedly connected to same.

## Revendications

1. Dispositif de revêtement de corps allongés, tels que listels, planches et autres pièces analogues, avec un matériau en forme de bande, tel que placage ou pellicule, ce dispositif comprenant un système d'avance (2) sur lequel les pièces à traiter (19) sont convoyées dans le sens de leur longueur et lequel est entouré, au moins le long d'un secteur, de plusieurs anneaux de support (3), disposés les uns derrière les autres dans le sens d'avance, dont les plans sont orientés chacun perpendiculairement au sens d'avance, ces anneaux de support (3) étant équipés, à l'intérieur, de bras (7) pourvus, à leur extrémité, de rouleaux de pression (8) destinés à guider et / ou presser la bande de revêtement sur les pièces à traiter (19) qui traversent les anneaux de support (3),
caractérisé en ce que
quelques-uns des anneaux de support (3), au moins, sont divisés pour former deux demi-anneaux (4) dont la distance par rapport au dispositif d'avance (2) peut être variée, ces demi-anneaux (4) étant disposés chacun sur un support ( 10) et ces supports (10) pourvus de dispositifs de réception (11) à l'aide desquels les demi-anneaux (4) sont reliés amoviblement aux supports (10).

2. Dispositif selon la revendication 1,
caractérisé en ce que
les demi-anneaux (4) sont conçus et disposés, symétriquement inversés, par rapport au plan médian longitudinal, vertical qui traverse le sens d'avance (2).

3. Dispositif selon la revendication 2,
caractérisé en ce que
les supports (10) accueillant les demi-anneaux (4) sont ajustables sur un dispositif de guidage (14), perpendiculairement par rapport au sens de la longueur du dispositif d'avance (2).

4. Dispositif selon la revendication 3,
caractérisé en ce que
les deux supports (10) de chaque couple de demi-anneaux (4) sont montés sur un dispositif de guidage commun (14) qui passe sous le dispositif d'avance (2).

5. Dispositif selon la revendication 4,
caractérisé en ce que
les deux supports (10) apparentés sont réglables synchrone contrairement à l'aide d'une broche commune (15) avec filetage droite-gauche.

6. Dispositif selon l'une des revendications 3 à 5,
caractérisé en ce que
chacun des demi-anneaux (4) est relié, par son extrémité inférieure (9) à son support respectif (10).

7. Dispositif selon revendications 1 à 6,
caractérisé en ce que
les dispositifs de réception (11) présentent des guidages prismatiques, disposés sur les supports (10) ainsi qu'une goupille de repère (12) qui fixe les demi-anneaux (4)

8. Dispositif selon l'une des revendications 3 à 7
caractérisé en ce que
les moitiés (4) de tous les anneaux de support (3) forment un groupe interchangeable avec les bras (7) et les rouleaux de pression (8) qui sont fixés respectivement sur les demi-anneaux 4.

9. Dispositif selon l'une des revendications 1 à 8,
caractérisé en ce que,
sur les demi-anneaux apparentés (4), disposés à distance l'un de l'autre, un pont (17), y reliable fixement, peut être installé pour la mise en place d'autres bras (7) et rouleaux de pression (8).
